# EUROPÄISCHE PATENTANMELDUNG

(11) **EP 3 972 091 A1**
(43) Veröffentlichungstag der Anmeldung: **23.03.2022**
(21) Anmeldenummer: 21196925.8
(22) Anmeldetag: 15.09.2021
(51) Int. Cl.: H02K 5/04, H02K 5/16

(54) **GEHÄUSE FÜR EINE ELEKTRISCHE MASCHINE, ELEKTRISCHE MASCHINE UND FAHRZEUG MIT EINER ELEKTRISCHEN MASCHINE**

(30) Priorität: 18.09.2020 DE 102020124436
(71) Anmelder: Valeo Siemens eAutomotive Germany GmbH, 91056 Erlangen (DE)
(72) Erfinder: Tan, Kae-Shyuan, 97616 Bad Neustadt a.d.Saale (DE)

(57) **Zusammenfassung**

Gehäuse (1) für eine elektrische Maschine, das wenigstens einen von einer Außenfläche (6) des Gehäuses (1) beabstandet angeordneten Anschluss (2) zur schraubbaren Befestigung des Gehäuses (1) aufweist, sowie wenigstens eine Rippe (5, 8), die eine Kontaktfläche (3) des Anschlusses (2) und die Außenfläche (6) des Gehäuses (1) miteinander verbindet, wobei die Außenfläche (6) des Gehäuses (1) in Verlängerung der Rippe (5, 8) eine Ausnehmung (9, 10) aufweist, welche von einem Lagerschild abgedeckt ist. Daneben werden eine zugehörige elektrische Maschine und ein Fahrzeug mit einer derartigen elektrischen Maschine beschrieben.

## Beschreibung

Die Erfindung betrifft ein Gehäuse für eine elektrische Maschine, das wenigstens einen von einer Außenfläche des Gehäuses beabstandet angeordneten Anschluss zur schraubbaren Befestigung des Gehäuses aufweist.

Elektrische Maschinen, die entweder als Elektromotor oder als Generator ausgebildet sein können, werden in zunehmendem Maße für den Antrieb von Fahrzeugen eingesetzt. Das Gehäuse wird dazu üblicherweise an einer Fahrzeugstruktur, z. B. an einem Fahrzeugrahmen oder an einer Fahrzeugkarosserie befestigt. Die Befestigung kann an zwei oder mehr Punkten erfolgen. Das Gehäuse weist dazu einen Anschluss auf, der ein Innengewinde aufweisen kann, sodass das Gehäuse mit der Fahrzeugstruktur verschraubt werden kann. Die Befestigung des Gehäuses muss so ausgelegt sein, dass sie die beim Betrieb des Fahrzeugs auftretenden Kräfte, Stöße und Vibrationen aushält.

Das Gehäuse weist eine Rippe auf, die zwischen einer Kontaktfläche des Anschlusses und der Außenfläche des Gehäuses angeordnet ist und den Anschluss und die Außenfläche miteinander verbindet.

Bei dieser Befestigung, bei der der Anschluss von der Außenfläche des Gehäuses beabstandet ist, können jedoch hohe Spannungsspitzen im Bereich der Rippe auftreten.

Der Erfindung liegt daher die Aufgabe zugrunde, ein Gehäuse für eine elektrische Maschine anzugeben, bei dem Spannungsspitzen im Bereich der Rippe verringert sind.

Zur Lösung dieser Aufgabe ist ein Gehäuse für eine elektrische Maschine vorgesehen, das wenigstens einen von einer Außenfläche des Gehäuses beabstandet angeordneten Anschluss zur schraubbaren Befestigung des Gehäuses aufweist, sowie wenigstens eine Rippe, die eine Kontaktfläche des Anschlusses und die Außenfläche des Gehäuses miteinander verbindet, wobei die Außenfläche des Gehäuses in Verlängerung der Rippe eine Ausnehmung aufweist., welche von einem Lagerschild abgedeckt ist.

Erfindungsgemäß wurde überraschend herausgefunden, dass durch das Vorsehen der Ausnehmung eine signifikante Verringerung der Spannungsspitzen im Bereich der Rippe, insbesondere zwischen der Rippe und der Außenfläche des Gehäuses, erzielt werden kann. Es wird angenommen, dass die wirkenden Kräfte durch die erfindungsgemäß vorgesehene Ausnehmung über einen größeren Bereich verteilt und Spannungsspitzen dadurch verringert werden. Durch die Verringerung der Spannungsspitzen kann auf andere mit Nachteilen verbundene Maßnahmen, wie zum Beispiel das Hinzufügen von Material, verzichtet werden. Das erfindungsgemäße Gehäuse weist somit eine geringere Masse im Vergleich zu einem herkömmlichen Gehäuse auf.

Gemäß einer Ausführung der Erfindung ist die Ausnehmung abgerundet ausgebildet. Die Ausnehmung weist somit keine Kanten oder Ecken auf, stattdessen ist die Ausnehmung gekrümmt. Die abgerundete Ausgestaltung der Ausnehmung trägt ebenfalls zur Verringerung von Spannungsspitzen bei.

Gemäß einer Ausführung der Erfindung weist die Ausnehmung zumindest näherungsweise eine konstante Tiefe auf. Dementsprechend ist der Abstand zwischen der Außenfläche des Gehäuses und der durch die Ausnehmung gebildeten Fläche konstant. Vorzugsweise verläuft die Ausnehmung parallel und gegenüber der Außenfläche des Gehäuses in Richtung des Gehäuseinneren versetzt. Alternativ kann die Ausnehmung auch so ausgebildet sein, dass die durch die Ausnehmung gebildete Fläche schräg oder gekrümmt ausgebildet ist.

Im Rahmen der Erfindung kann es auch vorgesehen sein, dass eine zwischen der Außenfläche des Gehäuses und der Ausnehmung gebildete Kante abgerundet ausgebildet ist. Ein derartiger abgerundeter Übergang trägt ebenfalls zur Verringerung von Spannungsspitzen bei. In ähnlicher Weise kann auch ein Übergang zwischen einer senkrechten Fläche der Ausnehmung und der Grundfläche der Ausnehmung abgerundet ausgebildet sein.

Eine Variante der Erfindung sieht vor, dass in Umfangsrichtung um den Anschluss herum mehrere verteilt angeordnete Rippen ausgebildet sind. Beispielsweise können drei, vier, acht oder zehn Rippen in Umfangsrichtung vorgesehen sein. Die Rippen stützen den von der Außenfläche des Gehäuses beabstandet angeordneten Anschluss ab, sodass während des Betriebs auftretende Kräfte, Momente und sonstige Belastungen wie Vibrationen und Stöße aufgenommen werden können.

Es kann auch vorgesehen sein, dass eine Rippe in Richtung zur Ausnehmung hin breiter ausgebildet ist. Die Rippe läuft dann im Bereich ihres Fußes, in der Nähe der Ausnehmung, aus. Durch die breiter werdende Rippe werden die Kräfte über einen größeren Bereich verteilt und Spannungsspitzen vermieden.

Erfindungsgemäß ist die Ausnehmung von einem Lagerschild abgedeckt. Dementsprechend ist das Gehäuse so ausgebildet, dass die zur Reduzierung von Spannungsspitzen dienende Ausnehmung im montierten Zustand verdeckt und nicht sichtbar ist. Es ist aber auch möglich, dass die Ausnehmung nicht von einem Lagerschild abgedeckt ist.

Es ist auch möglich, dass die Ausnehmung in einem Dichtungsbereich des Lagerschilds angeordnet ist. Wenn das Lagerschild montiert ist, ist die Ausnehmung von einer Dichtung und dem Lagerschild abgedeckt und nicht sichtbar.

Eine Ausführung der Erfindung sieht vor, dass das Gehäuse mehrere derartige Ausnehmungen aufweist. Eine oder mehrere Ausnehmungen können in der Nähe eines Gewindelochs, das zur Befestigung des Lagerschild dient, angeordnet sein.

Daneben betrifft die Erfindung eine elektrische Maschine, die als Elektromotor oder als Generator ausgebildet ist und ein Gehäuse der beschriebenen Art aufweist.

Die Erfindung betrifft auch ein Fahrzeug, das eine zum Antreiben des Fahrzeugs konfigurierte elektrische Maschine mit einem Gehäuse der beschriebenen Art aufweist.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: eine perspektivische Ansicht eines erfindungsgemäßen Gehäuses im Bereich eines Anschlusses zur schraubbaren Befestigung.
- Fig. 2: das erfindungsgemäße Gehäuse in einer axialen Ansicht;
- Fig. 3: einen vergrößerten Ausschnitt der in Fig. 2 gezeigten Ansicht;
- Fig. 4: einen Schnitt entlang der Linie IV-IV von Fig. 3;
- Fig. 5: ein vergrößertes Detail von Fig. 4 im Bereich einer Ausnehmung; und
- Fig. 6: ein vergrößertes Detail von Fig. 4 im Bereich einer weiteren Ausnehmung.

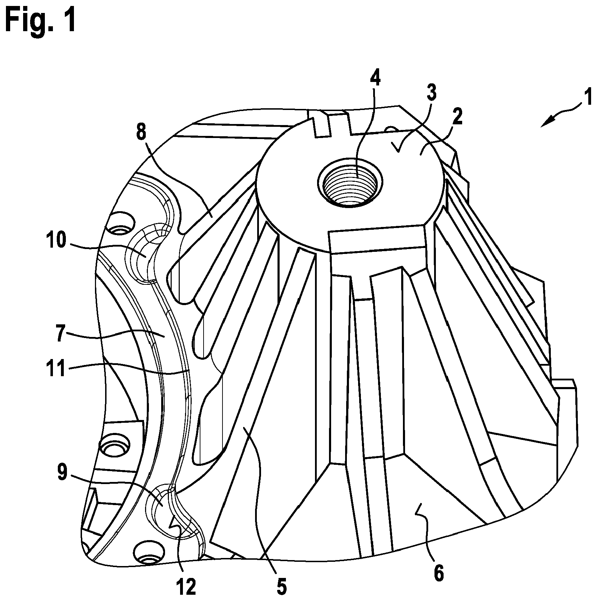

Fig. 1 ist eine perspektivische Ansicht und zeigt ein Detail eines Gehäuses 1 für eine elektrische Maschine. Das Gehäuse 1 besitzt die Grundform eines Zylinders. Um das Gehäuse 1 zu befestigen, weist es einen Anschluss 2 auf, der zur schraubbaren Befestigung des Gehäuses 1 vorgesehen ist. Der Anschluss 2 besitzt eine im wesentlichen kreisförmige Fläche 3, die mit einem Innengewinde 4 versehen ist. Mittels einer Schraube, die in das Innengewinde 4 geschraubt wird, kann das Gehäuse 1 an einem anderen Bauteil, beispielsweise an der Karosserie eines Fahrzeugs oder an einer Halterung oder dergleichen befestigt werden. Das Gehäuse 1 weist wenigstens zwei derartige Anschlüsse auf, mit denen es verschraubt werden kann.

In der perspektivischen Ansicht von Fig. 1 erkennt man, dass sich von dem Anschluss 2 mehrere Rippen 5, die in Umfangsrichtung verteilt angeordnet sind, erstrecken und den Anschluss 2 mit einer Außenfläche 6 des Gehäuses 1 verbinden. Der Anschluss 2 ist somit von der Außenfläche 6 des Gehäuses 1 beabstandet. Die einzelnen Rippen 5 besitzen zumindest näherungsweise eine dreieckige Grundform. Da der Anschluss 2 von der Außenfläche 6 beabstandet ist, befindet sich das Innengewinde 4 vollständig in dem von den Rippen 5 umschlossenen Volumen, d. h. außerhalb der Außenfläche 6 des Gehäuses 1.

in Fig. 1 erkennt man, dass sich an der linken Seite der Rippen 5 ein Dichtungsbereich 7 mit einer umlaufenden Nut anschließt. Die Rippen 5, die eine gewisse Breite bzw. Wandstärke aufweisen, sind an ihrem unteren Ende, d. h. in der Nähe der Außenfläche 6 des Gehäuses 1 bzw. in der Nähe des Dichtungsbereichs 7 verbreitert.

Die Rippe 5, die im vorderen Bereich der Fig. 1 gezeigt ist, sowie eine weiter hinten liegende Rippe 8 erstrecken sich bis zu dem Dichtungsbereich 7. In Verlängerung der Rippen 5, 8 weist die Außenfläche 6 des Gehäuses, genauer gesagt der Dichtungsbereich 7, jeweils eine Ausnehmung 9, 10 auf. In dem dargestellten Ausführungsbeispiel sind die beiden Ausnehmungen 9, 10 durch eine Außenkante 11 der Nut des Dichtungsbereich 7 begrenzt. Die beiden Ausnehmungen 9, 10 weisen in dem Dichtungsbereich 7 eine nierenförmige, abgerundete Grundform auf. Überraschenderweise hat es sich herausgestellt, dass durch das Vorsehen der Ausnehmungen 9, 10 Spannungsspitzen am Fuß der Rippen 5, 8 beträchtlich reduziert werden können. Während des Betriebs, d. h. im montierten Zustand des Gehäuses und des Elektromotors, werden über den Anschluss 2 beträchtliche Kräfte, Momente in Form von Stößen, Schwingungen und dergleichen von der Karosserie oder einer anderen Halterung über die Rippen 5, 8 an das Gehäuse 1 übertragen. Die Lagerung und Abstützung des Gehäuses 1 muss so ausgelegt werden, dass diese auftretenden Belastungen dauerhaft ertragen werden können. Die Ausnehmungen 9, 10 bewirken eine gewünschte Reduzierung von Spannungsspitzen durch eine bessere Verteilung der Lasten, sodass auf das Hinzufügen zusätzlichen Materials in dem hoch belasteten Bereich verzichtet werden kann.

In Fig. 1 erkennt man, dass eine zwischen der Außenfläche 6 des Gehäuses 1 und der Ausnehmung 9, 10 gebildete Kante abgerundet ausgebildet ist. Es ist auch sichtbar, dass der Übergang zwischen einem senkrechten Abschnitt der Ausnehmungen 9, 10 zu einer Bodenfläche 12 abgerundet ausgebildet ist. Die Bodenfläche 12 kann entweder parallel zur Außenfläche 6 des Gehäuses 1, d. h. eben, ausgebildet sein, als auch schräg dazu oder sie kann eine gekrümmte Kontur aufweisen.

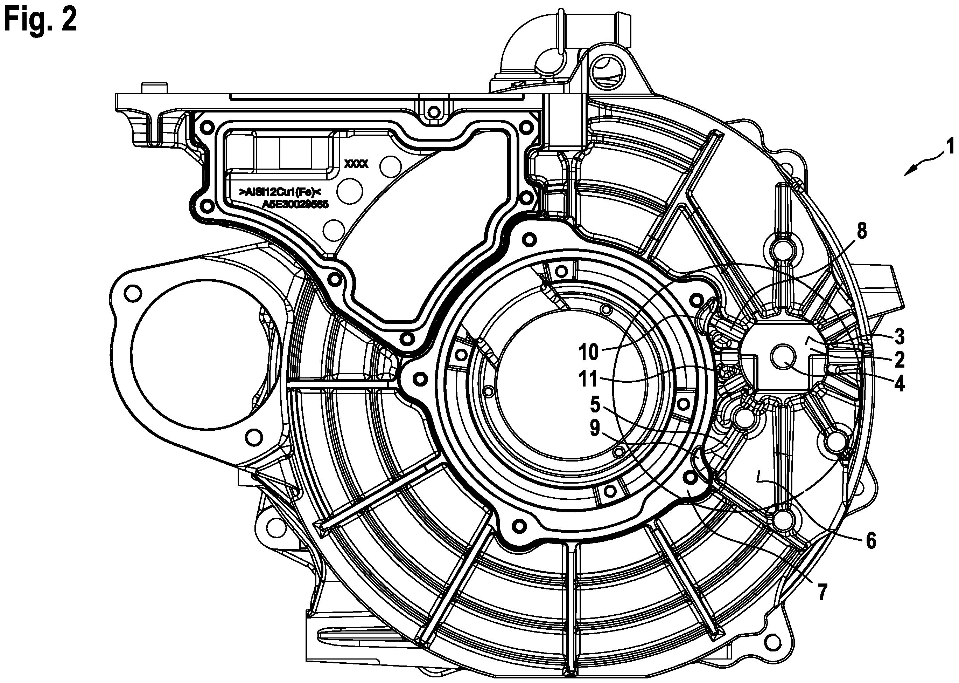

Fig. 2 ist eine axiale Ansicht des Gehäuses 1. Der Anschluss 2 befindet sich in der Darstellung von Fig. 2 auf der rechten Seite. Man erkennt, dass die Rippen sich sternförmig von dem Anschluss 2 nach außen erstrecken. Die Ausnehmungen 9, 10 befinden sich innerhalb des Dichtungsbereich 7 für einen Lagerschild (nicht gezeigt), der das Gehäuse 1 in Axialrichtung verschließt und mit einem Lager zur Lagerung einer Welle der elektrischen Maschine versehen ist.

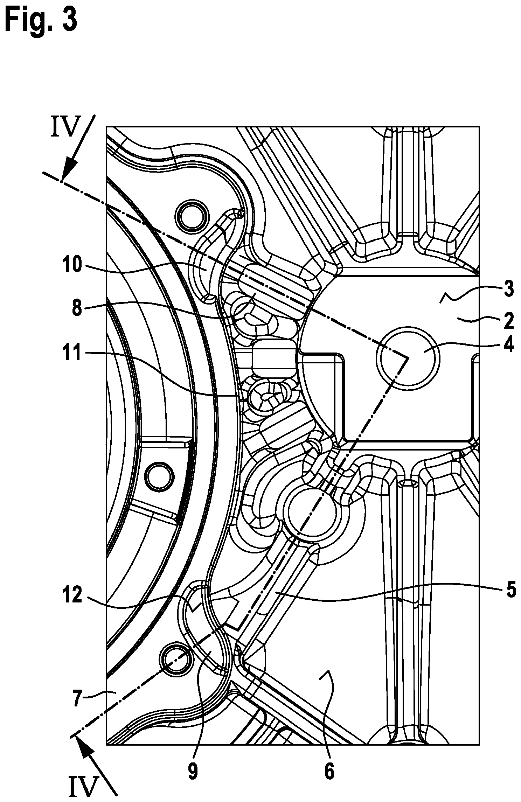

Fig. 3 zeigt ein Detail von Fig. 2 im Bereich der Ausnehmungen 9, 10 in einem vergrößerten Maßstab. Die Ausnehmungen 9, 10 erstrecken sich nur über einen Teil der Nut des Dichtungsbereichs 7, so dass die Funktion der Dichtung des Lagerschilds nicht beeinträchtigt wird.

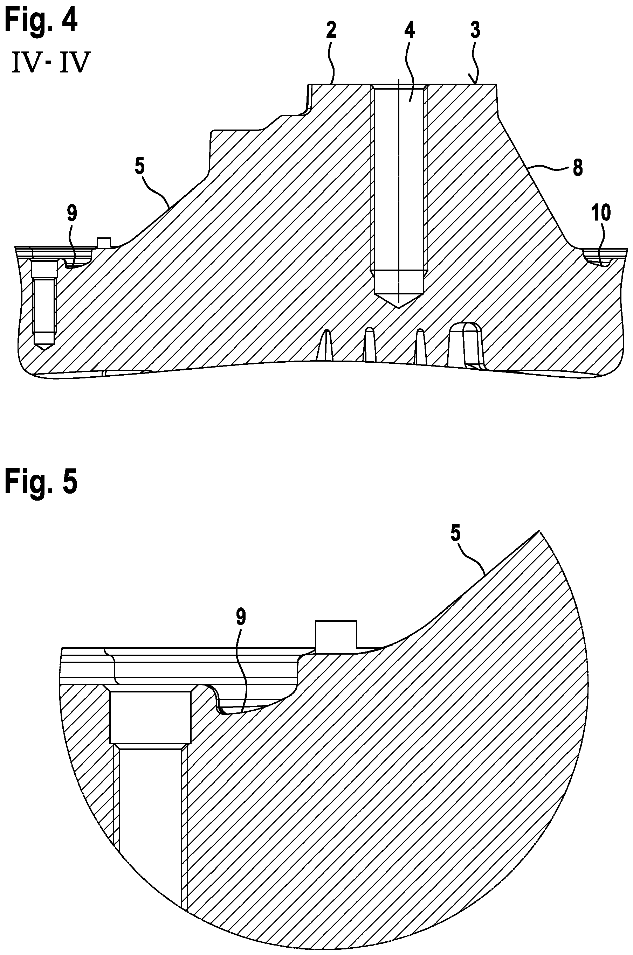

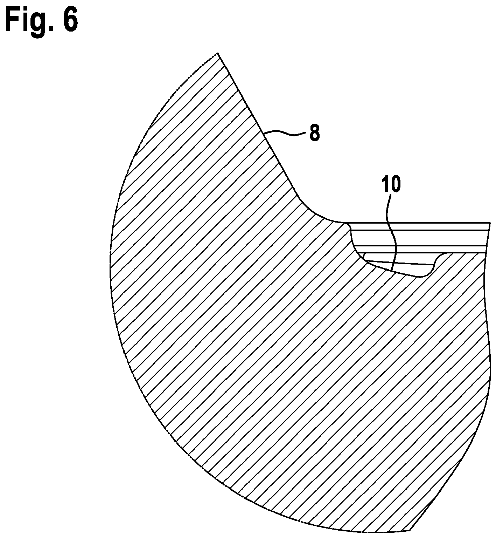

Fig. 4 zeigt einen Schnitt, der sich von einem Ende der Linie IV zum Innengewinde 4 des Anschlusses 2 und von dort bis zum anderen Ende der Linie IV erstreckt. Die Schnittebene schneidet beide Ausnehmungen 9, 10. Die Fig. 5 und 6 zeigen jeweils ein vergrößertes Detail von Fig. 4, wobei Fig. 5 einen Schnitt im Bereich der Ausnehmung 9 und Fig. 6 einen Schnitt im Bereich der Ausnehmung 10 darstellt. In den Schnittdarstellungen erkennt man das Profil der Ausnehmungen 9, 10. Diese verlaufen von außen nach innen, d. h. zum Anschluss 2 hin, schräg und steigen an.

Das Gehäuse 1 des dargestellten Ausführungsbeispiels ist aus einer Aluminiumlegierung im Druckgussverfahren hergestellt.

## Patentansprüche

1. Gehäuse (1) für eine elektrische Maschine, das wenigstens einen von einer Außenfläche (6) des Gehäuses (1) beabstandet angeordneten Anschluss (2) zur schraubbaren Befestigung des Gehäuses (1) aufweist, sowie wenigstens eine Rippe (5, 8), die eine Kontaktfläche (3) des Anschlusses (2) und die Außenfläche (6) des Gehäuses (1) miteinander verbindet, wobei die Außenfläche (6) des Gehäuses (1) in Verlängerung der Rippe (5, 8) eine Ausnehmung (9, 10) aufweist, welche von einem Lagerschild abgedeckt ist.

2. Gehäuse nach Anspruch 1, wobei die Ausnehmung (9, 10) abgerundet ausgebildet ist.

3. Gehäuse nach Anspruch 1 oder 2, wobei die Ausnehmung (9, 10) zumindest näherungsweise eine konstante Tiefe aufweist.

4. Gehäuse nach einem der vorangehenden Ansprüche, wobei eine zwischen der Außenfläche (6) des Gehäuses (1) und der Ausnehmung (9, 10) gebildete Kante abgerundet ausgebildet ist.

5. Gehäuse nach einem der vorangehenden Ansprüche, wobei in Umfangsrichtung um den Anschluss (2) herum mehrere verteilt angeordnete Rippen (5, 8) ausgebildet sind.

6. Gehäuse nach einem der vorangehenden Ansprüche, wobei eine Rippe (5, 8) in Richtung zur Ausnehmung (9, 10) hin breiter ausgebildet ist.

7. Gehäuse nach einem der vorhergehenden Ansprüche, wobei die Ausnehmung (9, 10) in einem Dichtungsbereich (7) des Lagerschilds angeordnet ist.

8. Elektrische Maschine, die als Motor oder Generator ausgebildet ist, mit einem Gehäuse (1) nach einem der Ansprüche 1 bis 7.

9. Fahrzeug, umfassend wenigstens eine zum Antreiben des Fahrzeugs konfigurierte elektrische Maschine nach Anspruch 8.
